# EUROPÄISCHE PATENTSCHRIFT

(11) **EP 2 309 160 B1**
(45) Veröffentlichungstag und Bekanntmachung des Hinweises auf die Patenterteilung: **14.11.2018**
(21) Anmeldenummer: 10178929.5
(22) Anmeldetag: 23.09.2010
(51) Int. Cl.: F16K 15/06, B05B 1/30, B05B 1/32, F25D 3/10

(54) **Vorrichtung zum Eindosieren eines kryogenen Mediums**
Device for feeding a cryogenic medium
Dispositif destiné au dosage d'un fluide cryogène

(30) Priorität: 06.10.2009 DE 102009048329
(43) Veröffentlichungstag der Anmeldung: 13.04.2011
(73) Patentinhaber: Messer France S.A.S., 92816 Puteaux Cedex (FR); Messer Group GmbH, 65812 Bad Soden (DE)
(72) Erfinder: Beaugé, Claude, 95610, Eragny-Sur-Oise (FR); Gockel, Frank, 77410, Charny (FR)
(74) Vertreter: Münzel, Joachim R.

(56) Entgegenhaltungen:
- EP-A2- 1 867 902
- US-A- 5 782 269
- US-A1- 2003 021 479

## Beschreibung

Die Erfindung betrifft eine Vorrichtung zum Eindosieren eines kryogenen Mediums mit einem eine Wandung aufweisenden Behältnis und wenigstens einem in der Wandung des Behältnisses integrierten und mit einer Zuführleitung für das kryogene Medium verbindbaren Ventil zum Einleiten des kryogenen Mediums in das Behältnis, wobei das Ventil mit einem sich durch ein Ventilgehäuse hindurcherstreckenden Führungskanal ausgerüstet ist, in dem ein behälterseitig mit einem tellerförmigen Vorderabschnitt ausgestattetes Absperrglied in axialer Richtung bewegbar geführt wird, welcher Vorderabschnitt im Schließzustand des Ventils auf einer Dichtfläche des Ventilgehäuses aufliegt, in Öffnungszustand dagegen beanstandet von dieser angeordnet ist, wobei die Dichtfläche des Ventilgehäuses derart zurückgesetzt in der Wandung des Behältnisses angeordnet ist, dass das Absperrglied mit einer dem Behälter zugewandten Fläche seines tellerförmigen Vorderabschnitts in Öffnungszustand des Ventils im wesentlichen bündig zu einer Innenoberfläche des Behältnisses verläuft.

In vielen industriellen Anwendungen werden kryogene Medien, insbesondere tiefkalte Flüssigkeiten oder Gase zum Kühlen oder Frosten von flüssigen, pastösen oder festen Produkten eingesetzt. Die Wärmeübertragung erfolgt dabei entweder indirekt, also ohne stofflichen Kontakt zwischen dem zu kühlenden Produkt und dem kryogenen Medium über Wärmetauscherflächen, oder durch eine direkte Kontaktierung des Produkts mit dem kryogenen Medium, bei der üblicherweise das zu kühlende Produkt durch eine Leitung geführt oder in einem Behälter gesammelt und das kryogene Medium über geeignete Düsen, Ventile oder sonstige Dosierorgane in die Leitung oder in den Behälter eingebracht wird. Im Folgenden werden die Begriffe "Leitung" und "Behälter" unter dem Begriff "Behältnis" subsumiert.

Befindet sich das zu kühlende Produkt in einem Behälter, beispielsweise in einem Mischer, so stehen verschiedene Möglichkeiten zum Einspeisen des kryogenen Mediums zur Verfügung: Bei der Einbringung im Kopfraum des Behälters haben die Eintrittstellen für das kryogene Medium keinen oder nur einen geringen Kontakt mit dem zu kühlenden Produkt. Da zwischen dem Produkt und den Eintrittsstellen ein gewisser Abstand besteht, ist die Gefahr der Vereisung der Eintrittstellen gering. Es können daher einfach aufgebaute Ventile oder Düsen, verwendet werden - beispielsweise Sprühdüsen oder Kapillardüsen, die gegenüber dem Behälterinnern stets geöffnet sind. Nachteilig bei diesen Systemen ist jedoch, dass immer nur ein Teil des kryogenen Mediums mit dem Produkt in Kontakt kommt und diesem Wärme entziehen kann, während der übrige, oft größere Teil ungenutzt in die Atmosphäre entweicht oder über eine Ableitung weggeführt wird. Ein weiterer Nachteil von gegenüber dem Behälterinneren stets geöffneten Düsen ist, dass dort Reinigungsmittel oder Wasser eindringen können. Neben der Möglichkeit der Bildung von bakteriellen Nestern besteht so die Gefahr, dass bei Einleitung eines kryogenen Mediums die eingedrungene Flüssigkeit auskristallisiert und das Dosierorgan verstopft.

Um die Wärmeenergie besser auf das kryogene Medium übertragen zu können, wird alternativ das kryogene Medium unmittelbar in das Produkt eingebracht. Dazu befinden sich die Eintrittstellen für das kryogene Medium nicht im Kopfraum, sondern in einem unteren Teil des Behälters, also in jenem Bereich, der während der Behandlung mit dem zu kühlenden Produkt gefüllt ist. Bei dieser, im Fachjargon auch als "Bottom-Injection" bezeichneten Vorgehensweise ist jedoch darauf zu achten, dass das Ventil stets verschließbar ist, um zu verhindern, dass die Eintrittstellen während der Behandlung durch gefrierendes Produkt vereisen und somit blockiert oder in ihrer Funktionsfähigkeit beeinträchtigt werden. Weiterhin muss verhindert werden, dass Produkt in das Innere der Düse eindringt und sich dort dauerhaft anlagert, wodurch die Gefahr einer Kontamination gegeben ist. Die hier angesprochene Problematik gilt sinngemäß auch bei der Injektion eines Kühlmittels in eine von einem flüssigen, oder allgemein fleißfähigen, Produkt durchströmten Leitung.

Ein für den Einsatz im Rahmen der "bottom injection" geeignetes Ventil zum Eintragen eines kryogenen Mediums wird in der DE 101 52 764 A1 beschrieben. Das Ventil umfasst ein Ventilgehäuse, das in der Wand eines Behälters, beispielsweise eines Mischers, integriert ist. Im Ventilgehäuse ist eine Ventilöffnung mit geringem Öffnungsquerschnitt angeordnet, die mittels einer Ventilnadel derart verschließbar ist, dass bei geschlossenem Ventil die Stirnfläche der Ventilnadel mit dem Ventilgehäuse bzw. der Innenoberfläche des Behälters im Wesentlichen bündig abschließt. Beim Einsatz des Ventils wird die Ventilnadel zurückgezogen und das Kühlmittel, beispielsweise flüssiger Stickstoff, strömt durch die Ventilöffnung in das Behälterinnere hinein und bildet einen tief in das zu kühlende Produkt eindringenden Kühlmittelstrahl aus. Beim Schließen des Ventils wird die Ventilnadel in Richtung auf den Behälter zu bewegt, wodurch etwaig in die Ventilöffnung eingedrungenes Produkt herausgedrängt wird. Nachteilig ist diese Anordnung insofern, als die Ventilnadel unabhängig vom Gaseintrag betätigt werden muss und daher die Gefahr besteht, dass bei plötzlichem Druckabfall in der Kühlmittelzuleitung Produkt aus dem Behälter in das Innere des Ventils eindringen kann.

In der WO 2008/007000 A2 wird eine andere Einrichtung zum Eindosieren eines kryogenen Mediums beschrieben. Diese Einrichtung umfasst ein Ventil mit einem kolbenförmigen Verschlusskörper, der in einem rohrförmigen Führungskanal gegen den Widerstand einer Feder axial beweglich aufgenommen und stirnseitig mit einem Schließteller ausgerüstet ist. Seitlich zu diesem Führungskanal sind mehrere Durchführungen zum Einbringen eines kryogenen Mediums vorgesehen, die mit einer Zuleitung für das kryogene Medium strömungsverbunden sind. Die Mündungsöffnungen der Durchführungen sind derart angeordnet, dass sie mit dem Schließteller des Verschlusskörpers unter der Wirkung der Feder geschlossen werden können. Überschreitet der Druck in der Kühlmittelzuleitung, und damit in den Durchführungen, einen gewissen, durch die Federkraft bestimmten Grenzwert, öffnet sich das Ventil. Bei Nachlassen des Druckes in der Kühlmittelzuleitung bewegen sich Kolben und Schließteller unter der Wirkung der Feder automatisch in den Schließzustand. Nachteilig bei diesem Gegenstand ist jedoch, dass der durch die einzelnen Durchführungen geleitete Strom des kryogenen Kühlmediums nur schwer kontrolliert werden kann. Zudem bergen die bauartbedingt filigran ausgestalteten Durchführungen für das kryogene Medium die Gefahr, im Betrieb einzufrieren oder zu verstopfen.

Aus der EP 1 867 902 A2 ist gleichfalls eine Vorrichtung zum Eindosieren eines kryogenen Mediums in einen Behandlungsraum bekannt, bei dem ein mit einem Schließteller ausgerüsteter Verschlusskörper in einem Führungskanal axial begrenzt beweglich gegen die Wirkung einer Feder angeordnet ist. Im Unterschied zum vorgenannten Gegenstand dient der Führungskanal des Verschlusskörpers zugleich als Strömungskanal für das kryogene Medium, wodurch der Aufbau des Ventils vereinfacht und die Gefahr eines Einfrierens vermindert wird. Problematisch ist jedoch, dass die Doppelfunktion des Führungskanals zu einer verminderten Stabilität bei der Führung des Verschlusskörpers führt, die fallweise zu einer Beeinträchtigung der Funktionsfähigkeit der Vorrichtung führen kann.

Die US 5,782,269 offenbart ein Sperrventil, das zum Einbau in einen Kettenspanner eines Raupenfahrzeugs bestimmt ist.

Aufgabe der vorliegenden Erfindung ist daher, eine Vorrichtung zum Eindosieren eines kryogenen Mediums zu schaffen, die einfach in Aufbau und mit hoher Zuverlässigkeit auch für die Injektion in einem unteren Bereich eines mit zu kühlendem Produkt befüllten oder von diesem durchströmten Behältnisses geeignet ist.

Gelöst ist diese Aufgabe bei einer Vorrichtung der eingangs genannten Art und Zweckbestimmung dadurch, dass der Führungskanal in seinem Querschnitt dem Querschnitt des Absperrglieds angepasst ist, wobei jedoch wenigstens ein nutförmiger Strömungskanal vorgesehen ist, der sich über die axiale Länge des Führungskanals erstreckt und im Bereich der Dichtfläche des Ventilgehäuses ausmündet, welcher nutförmige Strömungskanal derart angeordnet ist, dass das radiale Spiel des Absperrglieds im Führungskanal nicht erweitert wird.

Um Unterschied zum Gegenstand der WO 2008/007000 A2 kommen also keine separaten, am Ventil vorbei geführten Durchführungen zum Einsatz, sondern das kryogene Medium wird zumindest überwiegend durch den bzw. die nutförmig am Führungskanal bzw. am Absperrglied angeordneten Strömungskanal/-kanäle geführt, ohne dass dadurch das radiale Spiel des Absperrglieds im Führungskanal erweitert wird. Sind mehrere nutförmige Strömungskanäle vorgesehen, ist darauf zu achten, dass sie so angeordnet und bemessen sind, dass die enge radiale Führung des Absperrglieds durch den Führungskanal nicht beeinträchtigt wird. Die nutförmigen Strömungskanäle, die im übrigen einen runden oder eckigen Querschnitt haben können, enden im Bereich der Dichtfläche; sind die Strömungskanäle also in der Wandung des Führungskanals vorgesehen, enden sie direkt an der Dichtfläche. Sind die Strömungskanäle im Absperrglied vorgesehen, enden sie an der der Dichtfläche zugewandten Unterseite des tellerförmigen Vorderabschnitts, sodass die Kanäle im Schließzustand des Ventils durch das Zusammenwirken von tellerförmigem Vorderabschnitt und Dichtfläche geschlossen sind.

Eine vorteilhafte Weiterbildung der Erfindung sieht vor, dass in der Wandung des Führungskanals mindestens drei in gleichen Winkelabständen angeordnete Strömungskanäle vorgesehen sind, die parallel zueinander und zur Längsachse des Führungskanals verlaufen. Dadurch wird eine geradlinige Strömung des kryogenen Mediums bis zum Auftreffen auf den tellerförmigen Vorderabschnitt bewirkt, durch den das Medium anschließend in eine seitliche Richtung abgelenkt wird. Der gleichmäßige Winkelabstand der Strömungswege gewährleistet dabei ein in alle radiale Richtungen gleichmäßiges Ausströmen des kryogenen Mediums an der Ventilöffnung. Es können auch vier oder mehr Kanäle auf diese Weise angeordnet sein, wobei deren Anzahl und Querschnittsfläche so gewählt werden soll, dass die Führung des Absperrglieds weiterhin mit nur minimalem Spiel in radialer Richtung gewährleistet ist.

Anstelle von oder ergänzend zu Strömungskanälen, die in der Wandung des Führungskanals vorgesehen sind, ist es ebenso vorteilhaft, Strömungskanäle im Körper des Absperrglieds vorzusehen. Auch hier gewährleistet der gleichmäßige Winkelabstand der Strömungswege gewährleistet ein in alle radiale Richtungen gleichmäßiges Ausströmen des kryogenen Mediums an der Ventilöffnung. In diesem Falle kann der Führungskanal beispielsweise als einfache Rundbohrung ausgeführt sein, und das kryogene Medium wird vollständig durch die im Absperrglied angeordneten Strömungskanäle geführt.

Zweckmäßigerweise ist der tellerförmige Vorderabschnitt des Absperrgliedes auf seiner der Dichtfläche zugewandten Seite konisch zugeformt und wirkt mit einer entsprechend konischen Dichtfläche zusammen. Eine solche Ausbildung ist vorteilhaft, da sie einen vergleichsweise geringen Strömungswiderstand aufweist, jedoch beim Einströmen des kryogenen Mediums eine breite Verteilung des Mediums im Behältnis begünstigt und zudem keine Möglichkeit zur Anlagerung von Produktresten bietet.

Vorteilhafterweise ist das Ventil mit Mitteln ausgerüstet, die oberhalb eines vorgegebenen Differenzdrucks zwischen dem Druck des kryogenen Mediums in der Zuführleitung und dem Druck im Behältnis die Einleitung des kryogenen Mediums in das Behältnis ermöglichen, bei Unterschreiten des vorgegebenen Differenzdrucks dagegen das Ventil sperren. Damit wird sichergestellt, dass kein Produkt aus dem Behältnis in den Innenbereich des Ventils eindringen kann. Die Höhe des Differenzdrucks ist dabei insbesondere in Abhängigkeit vom eingesetzten kryogenen Medium und/oder von dem zu kühlenden Produkt zu wählen. Beispielsweise beträgt der Differenzdruck bei Flüssigstickstoff oder Flüssigsauerstoff zwischen 0,5 und 6 bar, bevorzugt zwischen 1,5 und 4 bar, bei Kohlendioxid entspricht der Differenzdruck mindestens dem Druck des Tripelpunkts (5,18 bar), bevorzugt 8 bis 10 bar. Das Behältnis selbst wird dabei häufig drucklos betrieben, d.h. im Innern herrscht Umgebungsdruck.

Das Absperrglied ist vorzugsweise gegen die Wirkung eines Federelements bewegbar ausgebildet, wobei in Öffnungsrichtung die Bewegung zum Inneren des Behältnisses hin erfolgt. Diese Ausgestaltung bietet insbesondere zwei Vorteile: Zum einen kann die Dichtfläche für den tellerförmigen Vorderabschnitt des Absperrglieds auf der behälterseitigen Ausmündung des Ventilgehäuses angeordnet werden. Das Ventil wird also unmittelbar im Bereich der Wand des Behältnisses geöffnet oder geschlossen. Es sind keine längeren Leitungsstrecken vorhanden, in denen sich während der Schließphase des Ventils Produkt anlagern kann. Zum anderen wird ein möglicher Differenzdruck, bei dem das Ventil öffnet bzw. schließt, durch die Rückstellkraft des Federelements festgelegt. Durch eine geeignete Wahl der Feder oder durch eine Variation des Federweges kann so der Differenzdruck leicht entsprechend den Anforderungen eingestellt werden.

Vorzugsweise ist das Absperrglied mit einem den Vorschub des Absperrglieds in axialer Richtung beschränkenden Wegbegrenzer ausgerüstet. Beispielsweise handelt es sich dabei um einen auf der vom tellerförmigen Vorderabschnitt entgegen gesetzten Stirnseite montierten Halteabschnitt, der mit einem entsprechenden Haltabschnitt des Ventilgehäuses zusammenwirkt. Der bevorzugt einstellbare Wegbegrenzer verhindert ein zu tiefes Eindringen des Absperrelements in das Innere des Behältnisses, das zu Behinderungen der im Behältnis herrschenden Strömungsverhältnisse oder dort angeordneter Einrichtungen, wie beispielsweise einem Mischer, Anlass geben könnte.

Erfindungsgemäß ist die Dichtfläche des Ventilgehäuses derart zurückgesetzt in der Wand des Behältnisses angeordnet, dass das Absperrglied in seinem Öffnungszustand nicht in den Innenraum des Behältnisses hinein vorsteht. Im Öffnungszustand steht das Absperrglied also höchstens so weit von der Dichtfläche vor, dass die dem Behälter zugewandte Fläche des tellerförmigen Vorderabschnitts im Wesentlichen bündig zu einer Innenoberfläche des Behältnisses verläuft. Auf diese Weise ist es insbesondere möglich, im Behältnis ein Misch- oder Schneidwerkzeug vorzusehen, das im Betrieb bis unmittelbar an die Innenwand des Behältnisses ausgreift, ohne vom geöffneten Ventilbehindert zu werden.

Um eine besonders gute Dichtheit im Schließzustand des Ventils herzustellen ist es vorteilhaft, dass in der Dichtfläche des Ventilgehäuses ein rundumlaufendes Dichtelement vorgesehen ist, beispielsweise ein in einer rundumlaufenden Nut geführter Dichtring aus einem kältebeständigen Material.

Vorzugsweise ist das Ventil lösbar mit der Innenwand des Behältnisses verbunden. Beispielsweise ist das Ventilgehäuse mit einem Gewinde versehen, das in ein entsprechendes Innengewinde in der Wand des Behältnisses oder in einer mit der Wand des Behältnisses verbundenen Ventilaufnahme eingeschraubt werden kann. Auf diese Weise lässt sich das Ventil einfach den jeweiligen Anforderungen anpassen und beim Wechsel des kryogenen Mediums oder des zu kühlenden Produkts leicht austauschen oder umrüsten.

In einer ebenfalls vorteilhaften Ausgestaltung der Erfindung handelt es sich bei dem Behältnis um eine Leitung zum Transport eines flüssigen oder gasförmigen Produkts. Die Leitung kann dabei auch eine Druckleitung sein. Derartige Systeme werden insbesondere zum Einleiten von verflüssigtem Kohlendioxid in Flüssigkeiten eingesetzt, beispielsweise in der Umwelttechnik zur Behandlung von Abwasser oder zum Auffrischen oder Entkeimen flüssiger Nahrungsmittel wie Wein, Säfte oder Milch. Die erfindungsgemäße Vorrichtung verhindert hier zuverlässig das Eindringen von Produkt in das Ventilinnere oder in die Zuleitung für das kryogene Medium, selbst im Falle von Druckschwankungen in der Leitung für das Produkt oder im Falle eines Druckabfalls in der Zuleitung für das kryogene Medium.

In einer anderen Ausgestaltung der Erfindung ist das Ventil in der Wandung eines Behälters zum Mischen oder Aufbereiten eines Produkts vorgesehen. Derartige Behälter finden beispielsweise in der Lebensmittelindustrie oder in der pharmazeutischen Industrie für die chargenweise Herstellung eines Produkts oder Vorprodukts Verwendung.

Eine vorteilhafte Ausführungsform der Erfindung sieht vor, dass das Behältnis mit einer Mischeinrichtung zur Kühlung des Produkts während des Mischvorgangs ausgerüstet ist. Bei dem Behältnis handelt es sich in diesem Fall beispielsweise um einen Behälter, in dem eine Rühreinrichtung angeordnet ist, oder um eine Leitung, in der ein statischer Mischer vorgesehen ist.

Um eine besonders gute Kühlwirkung zu erzielen, ist das Ventil bevorzugt in einem Bereich des Behältnisses, also des Behälters oder der Leitung, angeordnet, der beim bestimmungsgemäßen Einsatz des Behältnisses von einem im Behältnis aufgenommenen Produkt benetzt wird. Bei dieser auch als ,bottom injection" bezeichneten Vorgehensweise wird das Kühlmedium also direkt in das Produkt eingetragen und somit innig mit diesem durchmischt.

Bevorzugt kommt als kryogenes Medium Stickstoff, Sauerstoff, Kohlendioxid, Argon und/oder Lachgas (NO₂) zum Einsatz. Stickstoff und Argon sind inert und besitzen gute Kühleigenschaften. Lachgas wird als sterilisierend wirkendes Gas häufig in Lebensmittelanwendungen eingesetzt. Der Einsatz von kaltem Sauerstoff bei der Kühlung insbesondere von Fleisch oder Fleischmasse führt nicht nur zu einer guten Kühlwirkung, sondern trägt zugleich zum Erhalt der roten Fleischfarbe bei. Ein gleichfalls vorteilhaftes kryogenes Medium ist Kohlendioxid, das flüssig herangeführt und beim Eintritt in das Behältnis unter Erzeugung von Kohlendioxidschnee entspannt. Der pulverförmige Kohlendioxidschnee kann mit insbesondere mit einem gleichfalls pulverförmigen Produkt innig durchmischt werden, wodurch eine effiziente Kühlung erzielt wird.

Anhand der Zeichnungen soll ein Ausführungsbeispiel der Erfindung näher erläutert werden.

In schematischen Ansichten zeigen:
Fig. 1: Eine erfindungsgemäße Vorrichtung zum Eindosieren eines kryogenen Mediums in einen Behälter im Längsschnitt,
Fig. 2: Die Vorrichtung aus Fig. 1 in einem Querschnitt längs der Schnittlinie II - II
Fig. 3: Der Führungskanal eines alternativen Aufbaus einer erfindungsgemäßen Vorrichtung

Die Vorrichtung umfasst ein Ventil 1, das an einem Behältnis, etwa einem für die Aufnahme eines zu kühlenden Produkts bestimmten Behälters 2, oder einer fluidführenden Rohrleitung montiert ist. Das Ventil 1 weist einen aus zwei Gehäuseteilen 6,7 bestehenden Ventilkörper auf. Das vordere Gehäuseteil 6 des Ventilkörpers ist lösbar in der Behälterwand 3 des Behälters 2 befestigt, beispielsweise verschraubt. Das hintere Gehäuseteil 7 des Ventilkörpers ist am vorderen Gehäuseteil 6 ebenfalls lösbar, beispielsweise durch Verschrauben, befestigt, wobei die dem hinteren Gehäuseteil 7 zugewandte Stirnseite des vorderen Gehäuseteils 6 mit einer Ringschulter 10 im Innern des hinteren Gehäuseteils 7 vorsteht. Auf seinem vom vorderen Gehäuseteil 6 entgegen gesetzten Ende weist das hintere Gehäuseteil 7 einen Anschluss 4 zum Verbinden mit einer hier nicht gezeigten Zuführleitung für ein kryogenes Medium auf. Der Anschluss 4 ist dabei an die Art der Zuführleitung für das kryogene Medium angepasst, und fallweise druck- und/oder tieftemperaturfest ausgelegt. Beispielsweise handelt es sich bei dem Anschluss 4 um einen Gewindeanschluss oder einen Flansch. Als kryogenes Medium kommt beispielsweise ein verflüssigtes Gas wie Flüssigstickstoff, Flüssigsauerstoff oder flüssiges Kohlendioxid oder auch ein kaltes Gas, beispielsweise tiefkalter gasförmiger Stickstoff, Lachgas oder Argon, zum Einsatz. Generell kann die erfindungsgemäße Vorrichtung dazu genutzt werden, Gas oder eine Flüssigkeit in ein Gas, eine Flüssigkeit oder in einen pastösen, pulverförmigen oder stückigen Stoff einzudosieren.

Im Innern des Ventilkörpers ist ein Absperrglied 11 axial beweglich aufgenommen, mittels dessen das Ventil 1 geschlossen und geöffnet werden kann. Das Absperrglied 11 umfasst einen im Wesentlichen zylindrisch ausgebildeten Innenabschnitt 12, 12', an dessen dem Behälter 2 zugewandten Stirnseite sich ein tellerförmiger Vorderabschnitt 13 anschließt. Der Innenabschnitt 12, 12' besitzt einen kreisförmigen Querschnitt und ist in seinem vorderen Abschnitt in einem Führungskanal 14 des vorderen Gehäuseteils aufgenommen.

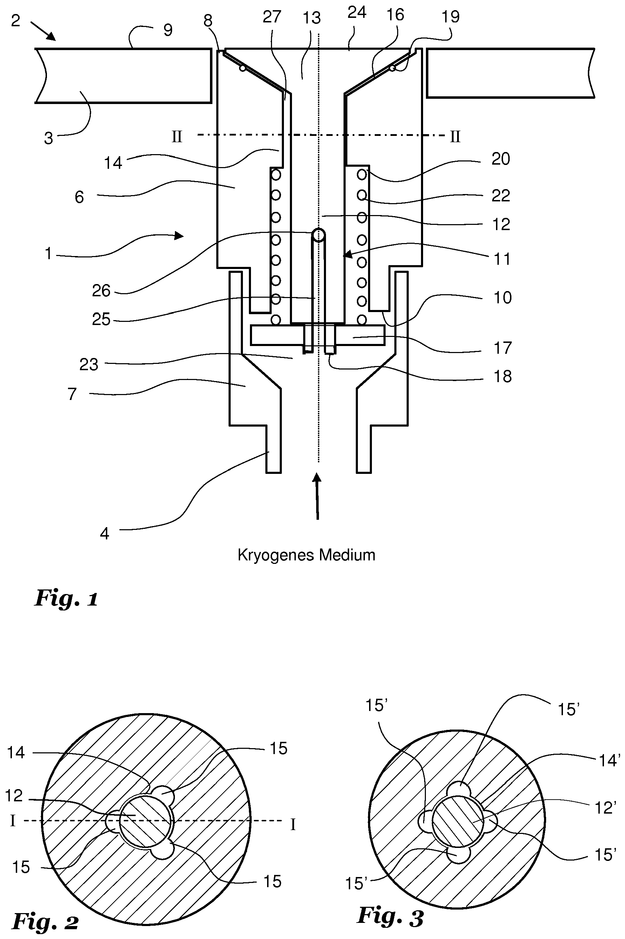

In Fig. 2 und Fig. 3 sind Querschnitte zweier im Rahmen der Erfindung denkbarer Führungskanäle 14, 14' gezeigt, bei denen es sich freilich nicht um eine vollständige Angabe aller im Rahmen der Erfindung möglichen Ausgestaltungen handelt. Die Führungskanäle 14, 14' umfassen jeweils eine zentrale, im Querschnitt ungefähr kreisförmige Bohrung, die in ihrem Außendurchmesser dem Außenumfang des jeweiligen Innenabschnitts 12, 12' derart angepasst ist, dass einerseits eine leichtgängige axiale Beweglichkeit des Absperrglieds 11 gewährleistet ist, andererseits dessen Spiel in radialer Richtung minimiert ist, um ein Verschwenken oder Verkanten in radialer Richtung zu unterbinden. Jeweils radial außenseitig an der zentralen Bohrung sind in gleichmäßigen Winkelabständen nutförmige Strömungskanäle 15, 15' angeordnet, wobei das Ausführungsbeispiel nach Fig. 2 drei Strömungskanäle und das Ausführungsbeispiel nach Fig. 3 deren vier aufweist. Die Strömungskanäle 15, 15' besitzen im Ausführungsbeispiel jeweils einen Querschnitt in Form eines Kreisausschnitts und vermitteln dem Führungskanal 14, 14' somit insgesamt im Querschnitt die Anmutung eines drei- bzw. vierblättrigen Kleeblatts. Jedoch sind im Rahmen der Erfindung auch andere Querschnitte für die Strömungskanäle, etwa rechteckige oder dreieckige Querschnitte, denkbar. Die Strömungskanäle 15, 15' dienen dem Transport des kryogenen Mediums durch den Führungskanal 14, 14' und erstrecken sich über die gesamte Länge des Führungskanals 14, 14'. Die Summe Ihrer lichten Querschnitte ist so bemessen, dass die Strömungskanäle 15, 15' von einem für die Kühlaufgabe hinreichenden Strom an kryogenem Medium durchflossen werden können, andererseits die durch die Strömungskanäle 15, 15' nicht erweiterten Wandabschnitte der zentralen Bohrung eine sichere Führung des Absperrglieds 11 gewährleisten. Je höher die Anzahl und/oder je größer der Strömungsquerschnitt der Strömungskanäle gewählt wird, desto gleichmäßiger strömt das kryogene Medium aus. Andererseits besteht bei einer zu großen Anzahl die Gefahr, dass das radiale Spiel des Absperrglieds 14 im Führungskanal 15, 15'wesentlich vergrößert wird.

Der auf seiner vom Behälter 2 abgewandten Seite konisch zugeformte Vorderabschnitt 13 des Absperrglieds 11 ist so ausgebildet, dass er im Schließzustand des Ventils 2 - wie in Fig. 1 gezeigt - auf einem entsprechend konisch geformten Ventilsitz 16 des vorderen Gehäuseteils 6 dichtend aufsitzt. Um die Dichtigkeit weiter zu verbessern ist ein Dichtring 19 aus einem flexiblen und kältebeständigen Material in einer entsprechenden, im Ventilsitz 16 rund umlaufenden Nut angeordnet. An der vom Behälter 2 abgewandten Seite des Innenabschnitts 12 des Absperrglieds 11 ist ein ringförmiger Hinterabschnitt 17 vorgesehen, der auf einem Halteabschnitt 18 des Innenabschnitts 12 lösbar aufmontiert, beispielsweise verschraubt ist. Der Außenradius des Hinterabschnitts 17 ist größer als der Innendurchmesser der Ringschulter 10 des Ventilkörpers. Beim Öffnen des Ventils 2 begrenzt somit die Ringschulter 10 die axiale Verschiebbarkeit des Absperrglieds 11 in Richtung auf das Innere des Behälters 2. Im maximalen Öffnungszustand liegt der Hinterabschnitt 17 auf der Ringschulter 10 auf. Im Schließzustand des Ventils 2 ist der Hinterabschnitt 17 dagegen beabstandet von der Ringschulter 10 angeordnet. Durch Verstellen der Position des Hinterabschnitts 17 am Absperrglied 16 kann der maximale Vortrieb des Absperrelements 16 variiert werden. Um eine Strömungsverbindung im Innern des Ventilkörpers zu beiden Seiten des Hinterabschnitts 17 sicher zu stellen, auch wenn der Hinterabschnitt 17 an der Ringschulter 10 anliegt, ist der Innenabschnitt 12 des Absperrglieds 11 mit einer zentralen Bohrung 25 versehen, die etwa auf halber Länge des Innenabschnitts 12, jedoch, vom Hinterabschnitt 17 aus gesehen, vor dem Führungskanal 15, 15' in eine Radialbohrung 26 einmündet, die wiederum radial außenseitig am Innenabschnitt 12 des Absperrglieds 11 endet. Im Innenraum des Ventilkörpers verteilt sich das kryogene Medium anschließend gleichmäßig auf die Strömungskanäle 15, 15'.

Der Führungskanal 14 des vorderen Gehäuseteils 6 mündet an seinem vom Behälter 2 abgewandten Ende in einen Innenraum 23 mit vergrößertem Querschnitt aus, unter Ausbildung einer als Federsitz 20 fungierenden Ringschulter. Zwischen diesem Federsitz 20 und dem Hinterabschnitt 17 ist eine spiralförmige Schließfeder 22 derart eingespannt, dass sie bereits in der Schließposition des Ventils 2 unter einer gewissen Vorspannung steht. Dadurch öffnet sich das Ventil 1 erst bei Vorliegen eines bestimmten, durch die Federkraft der Schließfeder 20 festgelegten Differenzwertes (Grenzdruck) zwischen dem Druck im Innenraum 23 des Ventilkörpers und dem Druck im Behälterinnenraum. Bei Überschreiten des Grenzdrucks wird das Absperrglied 11 aufgrund des auf den tellerförmigen Vorderabschnitt 13 des Absperrglieds 11 wirkenden Überdrucks im Innern des Ventilkörpers gegen die Wirkung der Schließfeder 22 axial in Richtung auf das Behälterinnere verschoben. Dabei werden zugleich die am Ventilsitz 16 mit ihren Mündungsöffnungen 27 endenden Strömungskanäle 15, 15' freigegeben, und das kryogene Medium kann in das Innere des Behälters 2 einströmen. Beispielsweise liegt der Grenzdruck beim Einsatz von Flüssigstickstoff bei 0,5 bar, der Vollhub des Absperrgliedes, d.h. der maximale Vortrieb wird bei 1 bar Überdruck erreicht. Bei Verwendung von Kohlendioxid als Kühlmedium ist darauf zu achten, dass der Grenzdruck auf einen Wert eingestellt wird, bei dem gewährleistet ist, dass das Kohlendioxid oberhalb seines Tripelpunkts, also oberhalb von 5,18 bar, vorliegt, um zu verhindern, dass sich innerhalb des Ventils 2 Trockeneis bildet, das unter Umständen zum Verschluss des Ventils führen kann. Beispielsweise soll in einem solchen Fall der Differenzdruck 7 bar betragen, wobei im Behälter Umgebungsdruck (1 bar) herrscht; das Ventil wird dann also erst geöffnet, wenn im Zulauf des kryogenen Mediums ein Druck von mindestens 8 bar angelegt wird. Die Dosierung der in den Behälter eingeführten Menge an kryogenem Medium erfolgt somit direkt durch die Änderung des Drucks in der Zuführleitung, die mit dem Druck im Innenraum 23 des Ventilkörpers korreliert.

Die konische Zuformung des Vorderabschnitts 13 des Absperrglieds 11 führt dazu, dass das kryogene Medium beim Einströmen in den Behälter 2 in radialer Richtung abgelenkt wird. Das kryogene Medium wird also nicht, wie beim Gegenstand der DE 101 52 764 A1 durch einen engen Kanal unter Ausbildung eines Kühlmittelstrahls in das Produkt eingetragen, sondern breit und flächig im Behältnis verteilt. Auf diese Weise werden lokale Unterkühlungen aufgrund einer zu starken Fokussierung des Kühlmittels im Produkt vermieden. Die durch den Abstand zwischen dem Hinterabschnitt 17 und der Ringschulter 10 im Schließzustand des Ventils festgelegte maximale Vorschub des Absperrglieds 11 ist dabei so gewählt, dass die Stirnfläche 24 des Vorderabschnitts 13 nicht weiter in das Innere des Behälters 2 vorsteht, als bis sie im Wesentlichen bündig mit der Innenoberfläche 9 der Behälterwand 3 angeordnet ist. Ein im Behälter 2 angeordnetes Rührwerk oder Schieber, das bzw. der bis zur Behälterwand 3 ausgreift, wird durch das Ventil 1 also nicht behindert.

Unterschreitet der Druck im Innenraum 23 des Ventilkörpers den oben definierten Grenzdruck, so schließt das Ventil 1 automatisch dadurch, dass sich das Absperrglied 11 unter der Wirkung der Schließfeder 22 in seine Sperrposition begibt, in der der tellerförmige Vorderabschnitt 13 auf der Dichtfläche 16 aufliegt. Dazu ist keine externe Ansteuerung des Absperrglieds 11 erforderlich. Da der Grenzdruck aufgrund der Vorspannung der Schließfeder 22 stets größer als der Innendruck im Behälter 2 ist, kann kein Produkt aus dem Innenraum des Behälters 2 in den Innenraum 23 des Ventils 2 eindringen. Dies gilt insbesondere auch im Falle eines plötzlichen, unvorhergesehenen Druckabfalls in der Zuführleitung des kryogenen Mediums. Daher ist die erfindungsgemäße Vorrichtung auch zum "bottom injection" geeignet, also zur Anordnung in einem Bereich der Behälterwand 3, der beim Einsatz vom zu kühlenden Produkt benetzt wird. Natürlich kann das Ventil 1 jedoch auch im Kopfraum des Behälters 2 oder in einer Zuleitung angeordnet werden.

Die Gehäuseteile 6,7 des Ventilkörpers, Absperrglied 11 und Feder 22 sind aus einem Material gefertigt, dass den tiefen Temperaturen und/oder den hohen Drücken des jeweils zum Einsatz kommenden kryogenen Mediums Rechnung trägt, beispielsweise aus einem geeigneten, tieftemperaturfesten Edelstahl. Zudem sind sie mit abgerundeten Kanten versehen, damit kein Produkt an den Ventilen anhaften und zu einer bakteriologischen Kontamination Anlass geben kann. Des weiteren sind die Teile 6,7,11 und 22 vorzugsweise lösbar miteinander und mit dem Behälter 2 verbunden, wodurch nicht nur eine etwaige Wartung erleichtert wird, sondern auch die Ventile dem jeweils eingesetzten kryogenen Medium und/oder der Behandlungsaufgabe angepasst werden können. Um das Ventil 1 den geänderten Anforderungen anzupassen, wird das hintere Gehäuseteil 7 vom vorderen Gehäuseteil entfernt, die Feder 22 durch eine entsprechend andere, z.B. härtere Feder bzw. Feder mit im Einbauzustand härteren Vorspannung ersetzt und der Ventilkörper verschlossen. Alternativ kann das Ventil 1 auch komplett ausgetauscht werden.

Die erfindungsgemäße Vorrichtung genügt insbesondere den gehobenen hygienischen Anforderungen bei der Behandlung von Lebensmittel wie Teig, Mehl, Maische oder Fleischmasse zur Wurstherstellung, oder bei der Herstellung pharmazeutischer Produkte, Vorprodukte und Inhaltsstoffe, da der Eintrag von Produkt aus dem Behälter bzw. der Leitung in das Ventil zuverlässig vermieden wird. Die erfindungsgemäße Vorrichtung ist aber ebenso gut zur Behandlung anderer Materialien geeignet, beispielsweise für Zuschlagstoffe der Bauindustrie wie Zement oder Beton. Ein weiteres Anwendungsgebiet betrifft die Eindüsung eines kryogenen Mediums in eine von einem Gas oder einer Flüssigkeit durchströmten Leitung, beispielsweise bei der Abwasserbehandlung oder der Behandlung von Wein, Säften oder Milch.

### Bezugszeichenliste

- 1.: Ventil
- 2.: Behälter
- 3.: Behälterwand
- 4.: Anschluss
- 5.: -
- 6.: vorderer Gehäuseteil des Ventilkörpers
- 7.: hinterer Tei des Ventilkörpers
- 8.: Ausmündung (des Ventils)
- 9.: Innenoberfläche (der Behälterwand)
- 10.: Ringschulter
- 11.: Absperrglied
- 12., 12'.: Innenabschnitt
- 13.: Vorderabschnitt
- 14., 14'.: Führungskanal
- 15., 15'.: Strömungskanal
- 16.: Ventilsitz
- 17.: Hinterabschnitt
- 18.: Halteabschntitt
- 19.: Dichtring
- 20.: Federsitz
- 21.: -
- 22.: Schließfeder
- 23.: Innenraum des Ventilkörpers
- 24.: Stirnfläche
- 25.: zentrale Bohrung
- 26.: Radialbohrung
- 27.: Mündungsöffnung

## Patentansprüche

1. Vorrichtung zum Eindosieren eines kryogenen Mediums, mit einem eine Wandung (3) aufweisenden Behältnis (2) und wenigstens einem in der Wandung (3) des Behältnisses (2) integrierten und mit einer Zuführleitung für das kryogene Medium verbindbaren Ventil (1) zum Einleiten des kryogenen Mediums in das Behältnis (2), wobei das Ventil (1) mit einem sich durch ein Ventilgehäuse hindurcherstreckenden Führungskanal (14, 14') ausgerüstet ist, in dem ein behälterseitig mit einem tellerförmigen Vorderabschnitt (13) ausgestattetes Absperrglied (11) in axialer Richtung bewegbar geführt wird, welcher Vorderabschnitt (13) im Schließzustand des Ventils (1) auf einer Dichtfläche (16) des Ventilgehäuses aufliegt, in Öffnungszustand dagegen beanstandet von dieser angeordnet ist, wobei die Dichtfläche (16) des Ventilgehäuses derart zurückgesetzt in der Wandung (3) des Behältnisses (2) angeordnet ist, dass das Absperrglied (11) mit einer dem Behälter zugewandten Fläche seines tellerförmigen Vorderabschnitts (13) in Öffnungszustand des Ventils (1) im wesentlichen bündig zu einer Innenoberfläche (9) des Behältnisses (2) verläuft.
**dadurch gekennzeichnet,**
**dass** der Führungskanal (14, 14') in seinem Querschnitt dem Querschnitt des Absperrglieds (11) angepasst ist, wobei jedoch wenigstens ein nutförmiger Strömungskanal (15, 15') vorgesehen ist, der sich über die axiale Länge des Führungskanals (14, 14') erstreckt und im Bereich der Dichtfläche (16) des Ventilgehäuses ausmündet, welcher nutförmige Strömungskanal (15, 15') derart angeordnet ist, dass das radiale Spiel des Absperrglieds (11) im Führungskanal (14, 14') nicht erweitert wird.

2. Vorrichtung nach Anspruch 1, **dadurch gekennzeichnet, dass** in der Wandung des Führungskanals (14, 14') zumindest drei in gleichen Winkelabständen voneinander beabstandet angeordnete, parallel zueinander und zur Längsachse des Führungskanals (14, 14') verlaufende Strömungskanäle (15, 15') vorgesehen sind.

3. Vorrichtung nach Anspruch 1 oder 2, **dadurch gekennzeichnet, dass** im Körper des Absperrglieds (11) zumindest drei in gleichen Winkelabständen voneinander beabstandet angeordnete, parallel zueinander und zur Längsachse des Führungskanals (14, 14') verlaufende Strömungskanäle (15, 15') vorgesehen sind.

4. Vorrichtung nach einem der vorhergehenden Ansprüche, **dadurch gekennzeichnet, dass** die Dichtfläche (16) des Ventilgehäuses konisch, sich zum Innern des Behältnisses (2) hin erweiternd, zugeformt ist und mit einer entsprechenden konischen Zuformung des tellerförmigen Vorderabschnitts (13) zusammenwirkt.

5. Vorrichtung nach einem der vorhergehenden Ansprüche, **dadurch gekennzeichnet, dass** das Ventil (1) mit Mitteln (6,7,11,22) ausgerüstet ist, die oberhalb eines vorgegebenen Differenzdrucks zwischen dem Druck des kryogenen Mediums in der Zuführleitung und dem Druck im Behältnis (2) die Einleitung des kryogenen Mediums ermöglichen, bei Unterschreiten des vorgegebenen Differenzdrucks dagegen das Ventil (1) sperren.

6. Vorrichtung nach einem der vorhergehenden Ansprüche, **dadurch gekennzeichnet, dass** das Absperrglied (11) mit einem den axialen Vorschub des Absperrglieds beschränkenden Wegbegrenzer (17) ausgerüstet ist.

7. Vorrichtung nach einem der vorhergehenden Ansprüche, **dadurch gekennzeichnet, dass** in der Dichtfläche (16) ein rundumlaufendes Dichtelement, etwa ein in einer rundumlaufenden Nut aufgenommener Dichtring (19), vorgesehen ist.

8. Vorrichtung nach einem der vorhergehenden Ansprüche, **dadurch gekennzeichnet, dass** das Ventil (1) lösbar mit der Wand (3) des Behältnisses (2) verbunden ist.

9. Vorrichtung nach einem der vorhergehenden Ansprüche, **dadurch gekennzeichnet, dass** das Ventil (1) in der Wandung einer Leitung für ein flüssiges oder gasförmiges Produkt montiert ist.

10. Vorrichtung nach einem der vorhergehenden Ansprüche, **dadurch gekennzeichnet, dass** das Ventil (1) in der Wandung eines Behälters zum Mischen oder Aufbereiten eines Produkts vorgesehen ist.

11. Vorrichtung nach einem der vorhergehenden Ansprüche, **dadurch gekennzeichnet, dass** das Behältnis (2) mit einer Mischeinrichtung für ein Produkt, insbesondere für ein Lebensmittel, ausgerüstet ist.

12. Vorrichtung nach einem der vorhergehenden Ansprüche, **dadurch gekennzeichnet, dass** das Ventil (1) in einem Bereich des Behältnisses angeordnet ist, der beim bestimmungsgemäßen Einsatz des Behältnisses von einem im Behältnis aufgenommenen Produkt benetzt wird.

13. Vorrichtung nach einem der vorhergehenden Ansprüche, **dadurch gekennzeichnet, dass** als kryogenes Medium Stickstoff, Kohlendioxid, Argon und/oder Lachgas zum Einsatz kommt.

## Claims

1. Apparatus for metering in a cryogenic medium, having a container (2) which has a wall (3), and having at least one valve (1) for introducing the cryogenic medium into the container (2), which valve (1) is integrated into the wall (3) of the container (2) and can be connected to a feed line for the cryogenic medium, the valve (1) being equipped with a guide duct (14, 14') which extends through the valve housing and in which a shut-off member (11) which is equipped on the container side with a plate-shaped front section (13) is guided such that it can be moved in the axial direction, which front section (13) lies on a sealing face (16) of the valve housing in the closed state of the valve (1), and in contrast is arranged spaced apart from the said sealing face (16) in the open state, the sealing face (16) of the valve housing being arranged set back in the wall (3) of the container (2) in such a way that, with a face of its plate-shaped front section (13) which faces the container, the shut-off member (11) runs substantially flush with respect to an inner surface (9) of the container (2) in the open state of the valve (1), **characterized in that** the cross section of the guide duct (14, 14') is adapted to the cross-section of the shut-off member (11), at least one groove-shaped flow duct (15, 15') being provided, however, which extends over the axial length of the guide duct (14, 14') and opens in the region of the sealing face (16) of the valve housing, which groove-shaped flow duct (15, 15') is arranged in such a way that the radial play of the shut-off member (11) in the guide duct (14, 14') is not increased.

2. Apparatus according to Claim 1, **characterized in that** at least three flow ducts (15, 15') which are arranged spaced apart from one another at identical angular spacings and run parallel to one another and to the longitudinal axis of the guide duct (14, 14') are provided in the wall of the guide duct (14, 14').

3. Apparatus according to Claim 1 or 2, **characterized in that** at least three flow ducts (15, 15') which are arranged spaced apart from one another at identical angular spacings and run parallel to one another and to the longitudinal axis of the guide duct (14, 14') are provided in the body of the shut-off member (11).

4. Apparatus according to one of the preceding claims, **characterized in that** the sealing face (16) of the valve housing is shaped conically, so as to widen towards the interior of the container (2), and interacts with a corresponding conical shaped portion of the plate-shaped front section (13).

5. Apparatus according to one of the preceding claims, **characterized in that** the valve (1) is equipped with means (6, 7, 11, 22) which make the introduction of the cryogenic medium possible above a predefined differential pressure between the pressure of the cryogenic medium in the feed line and the pressure in the container (2), and in contrast shut off the valve (1) if the predefined differential pressure is undershot.

6. Apparatus according to one of the preceding claims, **characterized in that** the shut-off member (11) is equipped with a travel limiter (17) which limits the axial advance of the shut-off member.

7. Apparatus according to one of the preceding claims, **characterized in that** a circular sealing element, for instance a sealing ring (19) which is received in a circular groove, is provided in the sealing face (16).

8. Apparatus according to one of the preceding claims, **characterized in that** the valve (1) is connected releasably to the wall (3) of the container (2) .

9. Apparatus according to one of the preceding claims, **characterized in that** the valve (1) is mounted in the wall of a line for a liquid or gaseous product.

10. Apparatus according to one of the preceding claims, **characterized in that** the valve (1) is provided in the wall of a container for mixing or preparing a product.

11. Apparatus according to one of the preceding claims, **characterized in that** the container (2) is equipped with a mixing device for a product, in particular for a foodstuff.

12. Apparatus according to one of the preceding claims, **characterized in that** the valve (1) is arranged in a region of the container which, in the case of proper use of the container, is wetted by a product which is received in the container.

13. Apparatus according to one of the preceding claims, **characterized in that** nitrogen, carbon dioxide, argon and/or nitrous oxide are/is used as cryogenic medium.

## Revendications

1. Ensemble d'introduction d'un fluide cryogénique présentant un récipient (2) doté d'une paroi (3) et au moins une soupape (1) intégrée dans la paroi (3) du récipient (2) et apte à être reliée à un conduit d'amenée de fluide cryogénique pour introduire le fluide cryogénique dans le récipient (2),
la soupape (1) étant équipée d'un canal de guidage (14, 14') qui traverse le boîtier de la soupape et dans lequel un organe de blocage (11) équipé du côté du récipient d'une partie avant (13) en forme de plateau est guidé à déplacement dans la direction axiale,
la partie avant (13) reposant sur une surface d'étanchéité (16) du boîtier de soupape lorsque la soupape (1) est en position de fermeture et en revanche étant maintenue à distance de cette dernière lorsque la soupape est en position d'ouverture,
la surface d'étanchéité (16) du boîtier de soupape étant située en retrait dans la paroi (3) du récipient (2) de telle sorte que lorsque la soupape (1) est en position ouverte, la surface tournée vers le récipient de la partie avant (13) en forme de plateau de l'organe de blocage (11) affleure essentiellement la surface intérieure (9) du récipient (2),
**caractérisé en ce que**
la section transversale du canal de guidage (14, 14') est adaptée à la section transversale de l'organe de blocage (11), mais au moins un canal d'écoulement (15, 15') en forme de rainure est prévu et s'étend sur la longueur axiale du canal de guidage (14, 14') pour déboucher au niveau de la surface d'étanchéité (16) du boîtier de soupape, ce canal d'écoulement (15, 15') en forme de rainure étant disposé de telle sorte que le jeu radial de l'organe de blocage (11) ne soit pas augmenté dans le canal de guidage (14, 14').

2. Ensemble selon la revendication 1, **caractérisé en ce qu'**au moins trois canaux d'écoulement (15, 15') sont prévus à même distance angulaire les uns des autres dans la paroi du canal de guidage (14, 14') et s'étendent parallèlement les uns aux autres ainsi que par rapport à l'axe longitudinal du canal d'écoulement (14, 14').

3. Ensemble selon les revendications 1 ou 2, **caractérisé en ce qu'**au moins trois canaux d'écoulement (15, 15') sont prévus à même distance angulaire les uns des autres dans le corps de l'organe de blocage (11) et s'étendent parallèlement les uns aux autres ainsi que par rapport à l'axe longitudinal du canal d'écoulement (14, 14').

4. Ensemble selon l'une des revendications précédentes, **caractérisé en ce que** la surface d'étanchéité (16) du boîtier de soupape est conique, s'évase en direction de l'intérieur du récipient (2) et correspond à une forme conique correspondante de la partie avant (13) en forme de plateau.

5. Ensemble selon l'une des revendications précédentes, **caractérisé en ce que** la soupape (1) est dotée de moyens (6, 7, 11, 22) qui permettent d'introduire le fluide cryogénique dans le récipient au-dessus d'une différence prédéterminée entre la pression du fluide cryogénique dans le conduit d'amenée et la pression qui règne dans le récipient (2) mais qui bloquent en revanche la soupape (1) lorsque la différence de pression prédéterminée n'est pas atteinte.

6. Ensemble selon l'une des revendications précédentes, **caractérisé en ce que** l'organe de blocage (11) est doté d'un limiteur de course (17) qui limite le déplacement axial de l'organe de blocage.

7. Ensemble selon l'une des revendications précédentes, **caractérisé en ce qu'**un élément périphérique circulaire d'étanchéité, à savoir d'une bague d'étanchéité (19) reprise dans une rainure périphérique circulaire est prévue dans la surface d'étanchéité (16).

8. Ensemble selon l'une des revendications précédentes, **caractérisé en ce que** la soupape (1) est reliée de manière libérable à la paroi (3) du récipient (2) .

9. Ensemble selon l'une des revendications précédentes, **caractérisé en ce que** la soupape (1) est montée dans la paroi d'un conduit prévu pour un produit liquide ou gazeux.

10. Ensemble selon l'une des revendications précédentes, **caractérisé en ce que** la soupape (1) est prévue dans la paroi d'un récipient de mélange ou de préparation d'un produit.

11. Ensemble selon l'une des revendications précédentes, **caractérisé en ce que** le récipient (2) est équipe d'un dispositif de mélange d'un produit et en particulier d'un produit alimentaire.

12. Ensemble selon l'une des revendications précédentes, **caractérisé en ce que** la soupape (1) est disposée dans une partie d'un récipient qui est mouillé par un produit repris dans le récipient lorsque le récipient est utilisé correctement.

13. Ensemble selon l'une des revendications précédentes, **caractérisé en ce que** le fluide cryogénique utilisé est l'azote, le dioxyde de carbone, l'argon et/ou le dioxyde d'azote.
